# EUROPEAN PATENT SPECIFICATION

(11) **EP 3 171 094 B1**
(45) Date of publication and mention of the grant of the patent: **22.08.2018**
(21) Application number: 15425099.7
(22) Date of filing: 19.11.2015
(51) Int. Cl.: F24H 8/00

(54) **ENHANCED TYPE CONDENSING BOILER**
VERBESSERTER KONDENSATIONSBOILER
CHAUDIÈRE À CONDENSATION AMÉLIORÉE

(43) Date of publication of application: 24.05.2017
(73) Proprietor: UNICAL AG S.p.A., 46033 Castel d'Ario (MN) (IT)
(72) Inventor: Fiorani, Sergio, I-46030 Bigarello (Mantova) (IT)
(74) Representative: Botti, Mario

(56) References cited:
- EP-A1- 1 508 756
- EP-A1- 1 703 244
- DE-A1- 3 730 863
- US-A1- 2013 255 664

## Description

### Field of application

The present invention relates, according to its more general aspect, to a condensing boiler, where the term "boiler" refers here generally to any apparatus for heating premises and/or for the production of sanitary hot water.

More particularly, but not exclusively, the invention relates to a wall-mounted boiler, of the type designed to be installed in a fixed manner inside a building to be heated.

The invention therefore relates to the technological sector of installations for heating residential and/or working premises and for providing, where necessary, sanitary hot water.

### Prior art

The recent publication of European regulations which define stringent performance requirements for heating apparatus and/or apparatus for the production of sanitary hot water has helped accelerate - at least in the member countries of the EU - the gradual replacement of conventional boilers which have now become obsolete.

In particular, these conventional boilers are being replaced more and more by so-called "condensing boilers" which ensure a significantly superior performance in response to the current requirements and the growing sensitivity in the area of energy savings and environmental sustainability.

These condensing boilers in fact are able to recover, at least partially, the latent condensation heat of the water vapour present in the combustion fumes. Whereas in conventional boilers the water vapour is completely dispersed into the environment by means of the fumes, in a condensing boiler said fumes are partially cooled so that the heat is recovered from them by means of recondensation of the water vapour in a suitably designed heat exchanger. The condensed vapour is then collected inside a dedicated vessel and eliminated via the fluid connection with the domestic drainage system.

The sudden change in technology from conventional boilers to condensing boilers, while resulting in undeniable advantages for the end user, nevertheless has a number of drawbacks associated with replacement of the apparatus within the context of energy upgrading of existing buildings.

Unlike conventional boilers, the condensing boilers known in the art must in fact be provided with a connection to the domestic water drainage system inside which the condensed vapour collected during operation may be disposed of. Such a connection requires additional installation work which may also be of a particularly extensive nature should the previous boiler premises not be situated in the vicinity of the main drainage pipe.

The technical problem forming the basis of the present invention is therefore that of devising a condensing boiler which is able to solve the problem mentioned in connection with the prior art, namely that it should be able to be easily installed also in the case where there is no direct access to the drainage piping of a building. A condensing boiler disclosing the features of the preamble of claim 1 is known from the document DE 37 30 863 A1.

### Summary of the invention

The proposed solution is that of avoiding the need to connect the boiler to the domestic drainage network, by providing a discharge pump which extracts the condensate from the collecting vessel and conveys it to a point which is situated outside of the flow path of the fumes, but is sufficiently hot to produce evaporation of said condensate.

On the basis of this proposed solution, the aforementioned technical problem is solved by a condensing boiler comprising: at least one heat exchanger; a combustion chamber; a burner arranged inside said combustion chamber, a flow path for the fumes generated by the burner crossing a hot side of said heat exchanger; a collecting vessel in fluid connection with the hot side of said heat exchanger and designed to collect a condensate formed thereon; a discharge pump, configured to transport said condensate from the collecting vessel to an evaporation station external to said flow path of the fumes, but heated by said burner in an operating condition; as well as control means configured to activate said discharge pump in predefined conditions.

It should be noted that the burner is preferably, but not necessarily, a burner of the modulating type.

It should be noted that said control means may be advantageously formed by an electronic control unit, not necessarily dedicated for the control alone of the discharge pump. For example, the control means may take the form of the electronic board designed to control the general operation of the boiler. Alternatively, said control means may consist for example of an electromechanical system for activating the discharge pump.

Advantageously, said condensing boiler may be a wall-mounted boiler, provided with an external casing which encloses internally the heat exchanger, the burner and all the components which are designed for correct operation thereof and from which a fume discharge duct leads out.

The condensate, which as a result of gravity flows into the collecting vessel arranged at the bottom of the heat exchanger, is removed by an evacuation system with discharge pump which conveys it to a higher level, in the vicinity of the burner: for example above a premixing chamber or on the outside of a peripheral wall of the combustion chamber. These areas, which are preferably contained inside the volume of the external casing, are obviously hot during operation of the boiler such that the condensate evaporates as a result of the heat.

It should be pointed out that, during operation of a condensing boiler, the main accumulation of condensate occurs during the switching-on phase, while during normal operation the condensed water vapour is relatively limited. Advantageously, the system according to the invention allows the accumulation of the condensate during this phase, when the walls of the boiler would not have reached a temperature high enough to cause evaporation thereof, and subsequent disposal of the excess condensate during the course of normal operation, with hot walls which cause immediate evaporation.

The boiler according to the present invention may also comprise the following auxiliary and advantageous characteristic features which may be varying combined together depending on the specific technical requirements which may arise:
- said control unit may be configured to activate said discharge pump only when said condensing boiler is in an operating condition, i.e. the burner of the boiler is lit;
- said control unit may be configured to activate said discharge pump only when said condensing boiler is in a specific operating condition, for example normal operation condition, after a threshold temperature following a switching-on phase has been reached;
- said boiler may comprise at least one heat probe configured to detect a temperature of the condensing boiler, detected for example outside of a containing wall of the combustion chamber, or to send a corresponding temperature signal to the control means, said control means being configured to use said temperature signal during verification of the predefined conditions for activating the discharge pump;
- said boiler may comprise at least one level sensor configured to detect a level of said condensate inside said collecting vessel and send a corresponding level signal to the control means which may be configured to use said temperature signal during verification of the predefined conditions for activation of the discharge pump;
- said evaporation station is preferably arranged inside the external casing;
- said boiler may comprise an evaporation tank arranged, within said external casing, in the region of the evaporation station, said discharge pump being configured to transport the condensate inside said evaporation tank;
- said evaporation tank is preferably arranged at a higher level than the burner;
- a premixing chamber may be provided above said burner, an upper wall of the premixing chamber supporting externally the evaporation tank;
- the condensate evacuation system may comprise a nozzle configured to atomize the condensate transported by said discharge pump into the vicinity of said evaporation station;
- the heat exchanger may be provided with a side wall which separates the combustion chamber from the internal volume of the casing, said evaporation station being situated on the outside of said side wall, the nozzle thus being designed to spray the atomized condensate against said side wall;
- said burner may be of the reverse-flame type, said combustion chamber and said heat exchanger extending vertically below said burner;
- said collecting vessel may be arranged vertically offset with respect to said combustion chamber and connected to the latter by means of a siphon, for example a U-tube siphon;
- alternatively said collecting vessel may be arranged directly underneath said combustion chamber, vertically aligned therewith.

The aforementioned technical problem is also solved by a method for operation of a condensing boiler provided with at least some of the aforementioned characteristic features, said method comprising a step for verification that the predefined conditions have been reached and a step for activating the discharge pump subject to the positive outcome of said verification step.

The step for verification of the predefined conditions may comprise a step for checking the condensate level inside the collecting vessel and/or a step for checking the temperature in the region of said evaporation station.

Further characteristic features and advantages of the present invention will emerge from the description, provided hereinbelow, of a number of preferred examples of embodiment provided by way of a non-limiting example with reference to the accompanying drawings.

### Brief description of the drawings

Figure 1 shows a schematic view of a condensing boiler according to the present invention in a first embodiment thereof;
Figure 2 shows a schematic view of a second embodiment of the condensing boiler according to the present invention;
Figure 2A shows a schematic view, on a larger scale, of a detail of the boiler according to Figure 2;
Figure 3 shows a schematic view of a third embodiment of the condensing boiler according to the present invention;
Figure 4 shows a schematic view of a fourth embodiment of the condensing boiler according to the present invention;
Figure 4A shows a schematic view, on a larger scale, of a detail of the boiler according to Figure 4.

### Detailed description

With reference to the attached figures, four alternative embodiments of a condensing boiler according to the present invention are identified by the reference numbers 1, 101, 201 and 301.

The four boilers have in common most of the components and characteristic features and therefore in the figures and text the same reference numbers are used to identify components and characteristic features which are the same, albeit present in different embodiments.

In the description below, the general characteristic features of the boiler 1, 101, 201, 301 are described, with identification, where necessary, of the details which distinguish the various aforementioned embodiments.

The condensing boiler 1, 101, 201, 301 according to the invention has an external casing (not shown in the present figures) inside which the different operating components are contained and from which an evacuation flue 19 for the fumes leads out.

In particular, the body of a vertically extending heat exchanger 4 may be identified among the operating components arranged inside the external casing.

The upper volume of said body, inside which the flame of a burner 3 is produced, defines a combustion chamber 2; below the latter, a pegged portion of the aforementioned volume defines the actual exchanging part of the heat exchanger 4.

The burner 3 is of the reverse-flame type and is fed by an upper premixing chamber 16 which is pressurized by means of a blower 18.

The premixing chamber 16 is structured as a small-thickness interspace which is situated above both the heat exchanger 4 and the blower 18 and is covered by a flat upper wall 14.

The fumes generated by said burner 3 move away downwards passing through the heat exchanger 4, following a fumes flow path which then rises back up through the aforementioned evacuation flue 19.

On the hot side of said heat exchanger 4 the water vapour contained in the said fumes, namely the condensate W, is collected.

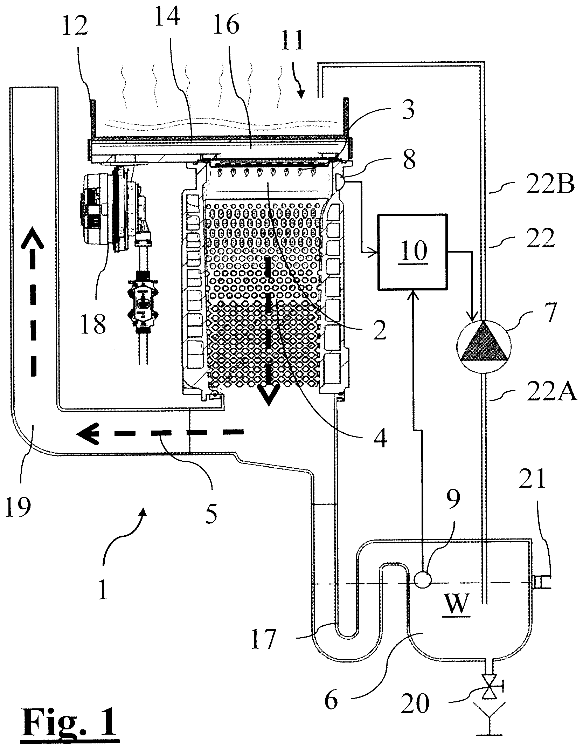

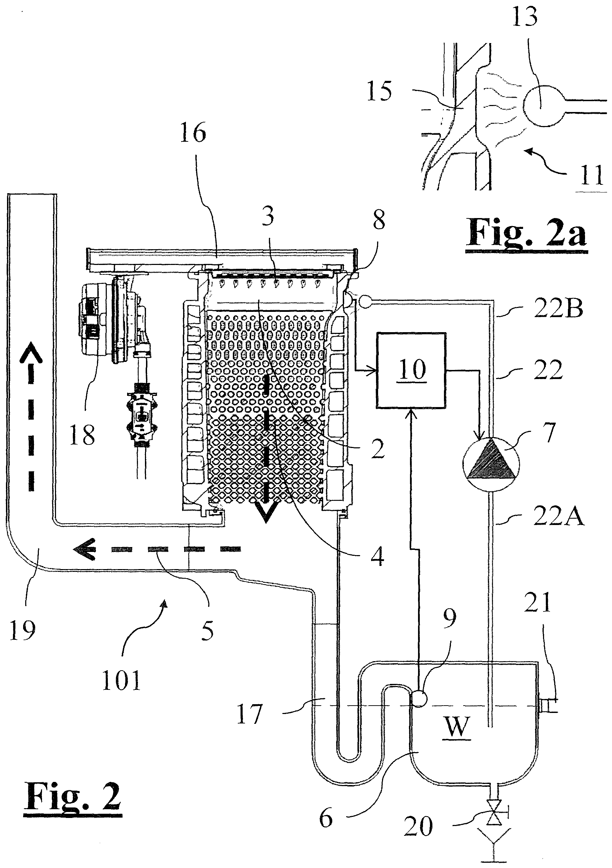

The condensate W falls back, as a result of gravity, towards the bottom end of the heat exchanger 4 where it is deposited in a collecting vessel 6. In the first and second embodiments 1, 101, shown in Figures 1 and 2, the collecting vessel 6 is situated vertically offset with respect to the heat exchanger 4 and is connected to the latter by means of a U-tube siphon 17. In the embodiments 201; 301, instead, the collecting vessel 6 is positioned so as to be arranged at the bottom directly underneath the heat exchanger 4 such that the two elements are vertically aligned.

The collecting vessel 6 may be advantageously designed as a drawer which is extractable by the user and also accessible from outside the casing (not shown).

Said vessel also has, in the embodiments illustrated here, a bottom discharge valve 20 and an overflow outlet 21 which may be connected, where necessary, to a domestic drainage system. It should be noted, however, that the connection to the discharge system is absolutely optional since the present invention offers an alternative system for disposal of the condensate W which is described below.

The condensate disposal system comprises a pipe 22 along which a discharge pump 7 is arranged and which at one end is immersed in the collecting vessel 6 while at the top it leads into an evaporation station 11 which is advantageously heated by the operation of the boiler 1, 101, 201, 301. The pipe section from the trap 6 to the pump 7 may be identified by 22A and the pipe section from the pump 7 to the evaporation station 11 may be identified by 22B.

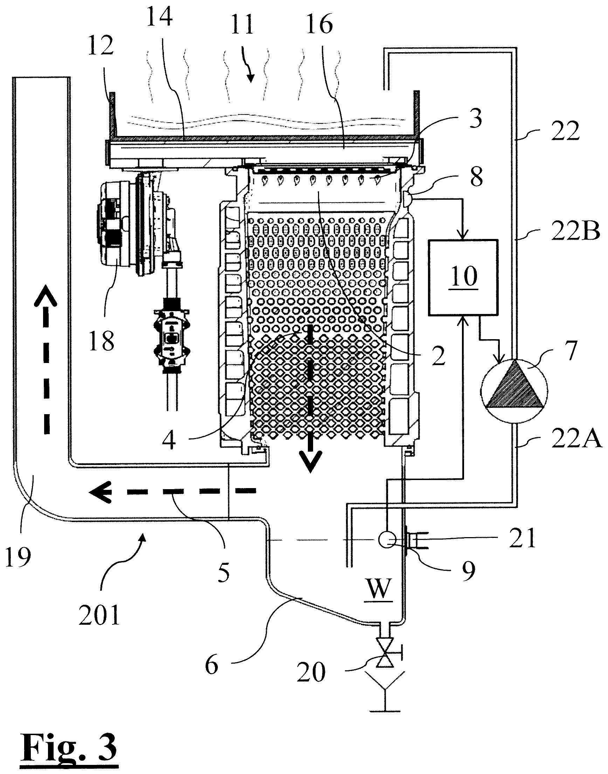

In the embodiments 1, 201, which are shown in Figures 1 and 3, the evaporation station 11 is formed by an actual evaporation tank 12 which is situated above the previously defined upper wall 14. The action of the discharge pump 7 conveys the condensate W through the pipe 22, along its sections 22A and 22B upstream and downstream of the pump 7, until it flows into said evaporation tank 12 where it is distributed over a relatively wide area, defining a thin liquid layer. The heat of the underlying boiler 1, 201 reaches the bottom surface of the tank 12 and therefore causes evaporation of the accumulated liquid inside the preferably hermetically sealed volume enclosed by the external casing (not shown).

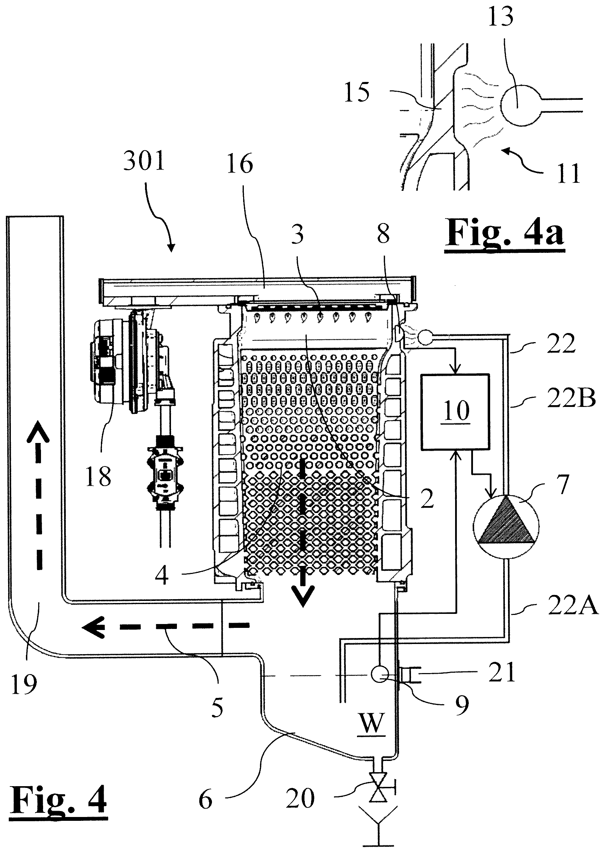

In the embodiments 101, 301 shown in Figures 2 and 4, the evaporation station 11 is instead formed by a side wall 15 of the heat exchanger 4. This side wall 15 communicates internally with the combustion chamber 2 in the vicinity of the burner 3. It consists essentially of the hottest part of the heat exchanger 4 since combustion takes places here and the flames pass over the walls and are not cooled by the water (dry wall). In these cases, the pipe section 22B is provided at its end with an atomizing nozzle 13 which sprays against the said side wall 15 the atomized condensate, causing immediate evaporation thereof.

In all cases, the discharge pump 7 is suitably controlled by control means 10 which take the form an electronic control unit which is, preferably, but not necessarily combined with the boiler control unit, and which acquires signals from different sectors situated on the condensation boiler 1, 101, 201, 301.

In particular, the control unit acquires a temperature signal obtained by a heat probe 8 which may be advantageously arranged in the region of the aforementioned evaporation station 11, for example outside of the dry side wall 15. The heat probe supplies to the control unit a parameter relating to the activation state of the boiler and the heat reached by the walls of the heat exchanger 4.

The control unit also acquires at least one signal relating to the level of the condensate W inside the collecting vessel 6, obtained by a level sensor 9 situated in the region of the latter.

Owing to the two aforementioned signals, the control unit may verify whether the conditions exist for pumping the condensate W outside of the collecting vessel towards the evaporation station 11. For example, these conditions may be reached when the temperature is sufficiently high and the level is sufficiently high.

As mentioned above, it is preferable to start the discharge pump 7 in the normal operating condition of the boiler 1, 101, 201, 301; while the collecting vessel 6 will be filled in particular during the starting-up phases.

Obviously a person skilled in the art, in order to satisfy any specific requirements which might arise, may make numerous modifications and variations to the device described above, all of which are contained moreover within the scope of protection of the invention, as defined by the following claims.

## Claims

1. Condensing boiler (1; 101; 201; 301) comprising: at least one heat exchanger (4); a combustion chamber (2); a burner (3) arranged inside said combustion chamber (2), a flow path for the fumes (5) generated by the burner (3) crossing a hot side of said heat exchanger (4); and a collecting vessel (6) in fluid connection with the hot side of said heat exchanger (4) and designed to collect a condensate (W) formed thereon, **characterized in that** it comprises a discharge pump (7), configured to transport said condensate (W) from the collecting vessel (6) to an evaporation station (11) external to said flow path of the fumes (5), but heated by said burner (3) in an operating condition; as well as control means (10) configured to activate said discharge pump (7) in predefined conditions.

2. Condensing boiler (1; 101; 201; 301) according to claim 1, where said control means (10) are configured to activate said discharge pump (7) only when said condensing boiler (1; 101; 201; 301) is in a specific operating condition.

3. Condensing boiler (1; 101; 201; 301) according to one of the preceding claims, comprising at least one heat probe (8) configured to detect a temperature of the condensing boiler (1; 101; 201; 301) and send a corresponding temperature signal to the control means (10), said control means (10) being configured to use said temperature signal during verification of the predefined conditions for activation of the discharge pump (7).

4. Condensing boiler (1; 101; 201; 301) according to one of the preceding claims, comprising at least one level sensor (9) configured to detect a level of said condensate (W) inside said collecting vessel (6) and send a corresponding level signal to the control means (10) which are configured to use said temperature signal during verification of the predefined conditions for activation of the discharge pump (7).

5. Condensing boiler (1; 101; 201; 301) according to one of the preceding claims, further comprising an external casing, said evaporation station (11) being arranged inside said external casing.

6. Condensing boiler (1; 201) according to claim 5, further comprising an evaporation tank (12) arranged, within said external casing, in the region of the evaporation station (11), said discharge pump (7) being configured to transport the condensate (W) inside said evaporation tank (12).

7. Condensing boiler (1; 201) according to claim 6, where said evaporation tank (12) is arranged at a higher level than the burner (3).

8. Condensing boiler (1; 201) according to claim 7, where said evaporation tank (12) is supported by an upper wall (14) of a premixing chamber (14) situated above said burner (3).

9. Condensing boiler (101; 301) according to claim 5, further comprising a nozzle (13) configured to atomize the condensate (W) transported by said discharge pump (7) towards said evaporation station (11).

10. Condensing boiler (101; 301) according to claim 9, where said evaporation boiler (11) is situated on the outside of a side wall (15) of the combustion chamber (2), said nozzle (13) being directed towards the outer side of said side wall (15).

11. Condensing boiler (1; 101; 201; 301) according to one of the preceding claims, where said burner (3) is of the reverse-flame type, said combustion chamber (2) and said heat exchanger (4) extending underneath said burner.

12. Condensing boiler (1; 101) according to claim 11, where said collecting vessel (6) is arranged vertically offset with respect to said combustion chamber (2) and connected to the latter by means of a siphon (17).

13. Condensing boiler (1; 101) according to claim 11, where said collecting vessel (6) is arranged underneath said combustion chamber (2).

14. Operating method for a condensing boiler according to one of the preceding claims, comprising a step for verification that predefined conditions have been reached and a step for activating the discharge pump (7) subject to the positive outcome of said verification step.

15. Method according to claim 14, wherein said step for verification of the predefined conditions comprises a step for checking the condensate level (W) inside the collecting vessel (6) and/or a step for checking the temperature in the region of said evaporation station (11).

## Patentansprüche

1. Kondensationsboiler (1; 101; 201; 301), umfassend: mindestens einen Wärmetauscher (4); eine Brennkammer (2); einen Brenner (3), der innerhalb der Brennkammer (2) angeordnet ist, einen Strömungsweg für die Abgase (5), die vom Brenner (3) erzeugt werden und die eine heiße Seite des Wärmetauschers (4) überqueren; und ein Sammelgefäß (6) in Fluidverbindung mit der heißen Seite des Wärmetauschers (4) und dafür ausgelegt, ein Kondensat (W) zu sammeln, das darauf gebildet wird, **dadurch gekennzeichnet, dass** er eine Ausgabepumpe (7) umfasst, die dafür ausgelegt ist, das Kondensat (W) vom Sammelgefäß (6) zu einer Verdampfungsstation (11) zu transportieren, die außerhalb des Strömungsweges der Abgase (5) liegt, aber durch den Brenner (3) in einem Betriebszustand erwärmt wird; sowie Steuerungsmittel (10), die dafür ausgelegt sind, die Ausgabepumpe (7) in vorgegebenen Bedingungen zu aktivieren.

2. Kondensationsboiler (1; 101; 201; 301) nach Anspruch 1, wobei die Steuerungsmittel (10) dafür ausgelegt sind, die Ausgabepumpe (7) nur zu aktivieren, wenn der Kondensationsboiler (1; 101; 201; 301) in einem spezifischen Betriebszustand ist.

3. Kondensationsboiler (1; 101; 201; 301) nach einem der vorherigen Ansprüche, der mindestens einen Wärmefühler (8) umfasst, der dafür ausgelegt ist, eine Temperatur des Kondensationsboilers (1; 101; 201; 301) zu erfassen und ein entsprechendes Temperatursignal an die Steuerungsmittel (10) zu senden, wobei die Steuerungsmittel (10) dafür ausgelegt sind, das Temperatursignal während der Überprüfung der vorgegebenen Bedingungen zur Aktivierung der Ausgabepumpe (7) zu verwenden.

4. Kondensationsboiler (1; 101; 201; 301) nach einem der vorherigen Ansprüche, der mindestens einen Füllstandssensor (9) umfasst, der dafür ausgelegt ist, einen Pegel des Kondensats (W) im Sammelgefäß (6) zu erfassen und ein entsprechendes Pegelsignal an die Steuerungsmittel (10) zu senden, die dafür ausgelegt sind, das Temperatursignal während der Überprüfung der vorgegebenen Bedingungen zur Aktivierung der Ausgabepumpe (7) zu verwenden.

5. Kondensationsboiler (1; 101; 201; 301) nach einem der vorherigen Ansprüche, der ferner ein externes Gehäuse umfasst, wobei die Verdampfungsstation (11) innerhalb des externen Gehäuses angeordnet ist.

6. Kondensationsboiler (1; 201) nach Anspruch 5, das ferner umfasst einen Verdampfungstank (12), der innerhalb des externen Gehäuses im Bereich der Verdampfungsstation (11) angeordnet ist, wobei die Ausgabepumpe (7) dafür ausgelegt ist, das Kondensat (W) innerhalb des Verdampfungstanks (12) zu transportieren.

7. Kondensationsboiler (1; 201) nach Anspruch 6, wobei der Verdampfungstank (12) auf einem höheren Niveau als der Brenner (3) angeordnet ist.

8. Kondensationsboiler (1; 201) nach Anspruch 7, wobei der Verdampfungstank (12) durch eine obere Wand (14) einer Vormischkammer (14) gestützt wird, die sich oberhalb des Brenners (3) befindet.

9. Kondensationsboiler (101; 301) nach Anspruch 5, der ferner eine Düse (13) umfasst, die dafür ausgelegt ist, das Kondensat (W) zu zerstäuben, das durch die Ausgabepumpe (7) zur Verdampfungsstation (11) transportiert wird.

10. Kondensationsboiler (101; 301) nach Anspruch 9, wobei der Verdampfungsboiler (11) sich auf der Außenseite einer Seitenwand (15) der Brennkammer (2) befindet, wobei die Düse (13) zur Außenseite der Seitenwand (15) gerichtet ist.

11. Kondensationsboiler (1; 101; 201; 301) nach einem der vorherigen Ansprüche, wobei der Brenner (3) vom Flammenumkehr-Typ ist, wobei die Brennkammer (2) und der Wärmetauscher (4) sich unterhalb des Brenners erstrecken.

12. Kondensationsboiler (1; 101) nach Anspruch 11, wobei der Sammelbehälter (6) vertikal versetzt zu der Brennkammer (2) und mit der letzteren durch einen Siphon (17) verbunden ist.

13. Kondensationsboiler (1; 101) nach Anspruch 11, wobei der Sammelbehälter (6) unterhalb der Brennkammer (2) angeordnet ist.

14. Betriebsverfahren für einen Kondensationsboiler nach einem der vorherigen Ansprüche, das einen Schritt zur Überprüfung umfasst, dass vorgegebene Bedingungen erreicht worden sind, und einen Schritt zum Aktivieren der Ausgabepumpe (7) abhängig vom positiven Ausgang des Überprüfungsschritts umfasst.

15. Verfahren nach Anspruch 14, wobei der Schritt zur Überprüfung der vorgegebenen Bedingungen einen Schritt zur Kontrolle des Kondensatpegels (W) innerhalb des Sammelbehälters (6) und/oder einen Schritt zum Überprüfen der Temperatur im Bereich der Verdampfungsstation (11) umfasst.

## Revendications

1. Chaudière à condensation (1 ; 101 ; 201 ; 301) comprenant: au moins un échangeur de chaleur (4) ; une chambre de combustion (2) ; un brûleur (3) disposé à l'intérieur de ladite chambre de combustion (2), un trajet d'écoulement des fumées (5) générées par le brûleur (3) traversant un côté chaud dudit échangeur de chaleur (4) ; et un récipient de collecte (6) en connexion fluidique avec le côté chaud dudit échangeur de chaleur (4) et conçu pour collecter un condensat (W) formé sur celui-ci, **caractérisé en ce qu'**il comprend une pompe de décharge (7) configurée pour transporter ledit condensat (W) depuis le récipient de collecte (6) jusqu'à une station d'évaporation (11) extérieure audit trajet d'écoulement des fumées (5), mais chauffée par ledit brûleur (3) dans une condition de fonctionnement ; ainsi que des moyens de commande (10) configurés pour activer ladite pompe de décharge (7) dans des conditions prédéfinies.

2. Chaudière à condensation (1 ; 101 ; 201 ; 301) selon la revendication 1, dans laquelle lesdits moyens de commande (10) sont configurés pour activer ladite pompe de décharge (7) uniquement lorsque ladite chaudière à condensation (1 ; 101 ; 201 ; 301) est dans une condition de fonctionnement spécifique.

3. Chaudière à condensation (1 ; 101 ; 201 ; 301) selon l'une des revendications précédentes, comprenant au moins une sonde thermique (8) configurée pour détecter une température de la chaudière à condensation (1 ; 101 ; 201 ; 301) et envoyer un signal de température correspondant aux moyens de commande (10), lesdits moyens de commande (10) étant configurés pour utiliser ledit signal de température pendant la vérification des conditions prédéfinies pour l'activation de la pompe de décharge (7).

4. Chaudière à condensation (1 ; 101 ; 201 ; 301) selon l'une des revendications précédentes, comprenant au moins un capteur de niveau (9) configuré pour détecter un niveau dudit condensat (W) à l'intérieur dudit récipient de collecte (6) et envoyer un signal de niveau correspondant aux moyens de commande (10) qui sont configurés pour utiliser ledit signal de température pendant la vérification des conditions prédéfinies pour l'activation de la pompe de décharge (7).

5. Chaudière à condensation (1 ; 101 ; 201 ; 301) selon l'une des revendications précédentes, comprenant en outre une enveloppe externe, ladite station d'évaporation (11) étant disposée à l'intérieur de ladite enveloppe externe.

6. Chaudière à condensation (1 ; 201) selon la revendication 5, comprenant en outre une cuve d'évaporation (12) agencée, à l'intérieur de ladite enveloppe externe, dans la zone de la station d'évaporation (11), ladite pompe d'évacuation (7) étant configurée pour transporter le condensat (W) à l'intérieur de ladite cuve d'évaporation (12).

7. Chaudière à condensation (1 ; 201) selon la revendication 6, dans laquelle ladite cuve d'évaporation (12) est disposée à un niveau plus élevé que le brûleur (3).

8. Chaudière à condensation (1 ; 201) selon la revendication 7, dans laquelle ladite cuve d'évaporation (12) est supportée par une paroi supérieure (14) d'une chambre de prémélange (14) située au-dessus dudit brûleur (3).

9. Chaudière à condensation (101 ; 301) selon la revendication 5, comprenant en outre une buse (13) configurée pour atomiser le condensat (W) transporté par ladite pompe de décharge (7) vers ladite station d'évaporation (11).

10. Chaudière à condensation (101 ; 301) selon la revendication 9, dans laquelle ladite chaudière d'évaporation (11) est située à l'extérieur d'une paroi latérale (15) de la chambre de combustion (2), ladite buse (13) étant dirigée vers le côté extérieur de ladite paroi latérale (15).

11. Chaudière à condensation (1 ; 101 ; 201 ; 301) selon l'une des revendications précédentes, dans laquelle ledit brûleur (3) est du type à flamme inverse, ladite chambre de combustion (2) et ledit échangeur de chaleur (4) s'étendant en dessous dudit brûleur.

12. Chaudière à condensation (1 ; 101) selon la revendication 11, dans laquelle ledit récipient de collecte (6) est disposé de façon décalée verticalement par rapport à ladite chambre de combustion (2) et est relié à celle-ci au moyen d'un siphon (17).

13. Chaudière à condensation (1 ; 101) selon la revendication 11, dans laquelle ledit récipient de collecte (6) est disposé au-dessous de ladite chambre de combustion (2).

14. Procédé de fonctionnement d'une chaudière à condensation selon l'une des revendications précédentes, comprenant une étape de vérification du fait que des conditions prédéfinies aient été atteintes et une étape d'activation de la pompe de décharge (7) conditionnée par un résultat positif de ladite étape de vérification.

15. Procédé selon la revendication 14, dans lequel ladite étape de vérification des conditions prédéfinies comprend une étape de contrôle du niveau de condensat (W) à l'intérieur du récipient de collecte (6) et / ou une étape de contrôle de la température dans la zone de ladite station d'évaporation (11).
